# EUROPEAN PATENT APPLICATION

(11) **EP 1 857 749 A2**
(43) Date of publication of application: **21.11.2007**
(21) Application number: 07008980.0
(22) Date of filing: 03.05.2007
(51) Int. Cl.: F25B 41/06

(54) **Mounting structure of expansion valve**

(30) Priority: 18.05.2006 JP 2006139007; 03.08.2006 JP 2006212449; 11.10.2006 JP 2006277265
(71) Applicant: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

In a portion where an expansion valve is mounted, a casing 6 is joined to a refrigerant outlet 3 of an evaporator 1. A low-pressure pipe 26 extending to a compressor is connected to the casing 6 by a pipe clamp 28. An expansion valve 7 is disposed within the casing 6. Within the casing 6, an inlet port 8 of the expansion valve 7 and a high-pressure pipe 24 are connected to each other, and an outlet port 9 of the expansion valve 7 and an inlet pipe 5 of an evaporator 1 are connected to each other. This limits the portions of the expansion valve 7 which can cause refrigerant leakages to the outside portions connected by the pipe clamp 28. The number of potential refrigerant leakage-prone spots to the outside is reduced.

## Description

The present invention relates to a mounting structure according to the preamble of claim 1, and more particularly to a mounting structure of an expansion valve configured to expand high-temperature, high-pressure refrigerant supplied from a condenser and deliver low-temperature, low-pressure refrigerant to an evaporator, in a refrigeration cycle of an automotive air conditioner.

A known thermostatic expansion valve (JP-A-2002-115938) comprises a block including a valve section, and a power element for controlling the valve section. The block has a connection hole for a high-pressure pipe connected to the receiver, a connection hole for a low-pressure pipe connected to the evaporator, a connection hole for a return pipe extending from an evaporator outlet, and a connection hole for a pipe connected to the compressor. The block serves as a joint of all the pipes. A longitudinal block end face has a screw hole for the power element, and the other longitudinal block end face has a screw hole for an adjustment screw serving to adjust a set value of the valve section from outside. Each hole is provided with a sealing member.

Currently, many automotive air conditioners still contain chlorofluorocarbon (HFC-134a) as refrigerant having a high global warming potential. As countermeasures against leakages to the exterior it has been proposed either to replace chlorofluorocarbon by another refrigerant having lower global warming potential, or to prevent chlorofluorocarbon leakages and to safely collect the substance when it is no longer used. Leakage-prone portions in the refrigeration cycle are e.g. pipe connecting portions and sealing members. In particular, joints of a high-pressure pipe between a compressor outlet and an expansion valve inlet are more leakage prone than low-pressure pipe joints.

However, in the known thermostatic expansion valve of JP-A-2002-115938 the body also serves as joint, and hence even when limited to pipe connections alone, the block has four connection portions which require sealing members. In addition, the portions where the power element and the adjustment screw are provided, can be reasons for refrigerant leakages. Six leakage-prone portions is a large number for this problem.

It is an object of the present invention to provide a mounting structure of an expansion valve having a reduced number of external refrigerant leakage-prone spots.

This object is achieved by the features of claim 1.

The mounting structure of an expansion valve in the refrigeration cycle is designed such that the expansion valve is accommodated in the course of the low-pressure return pipe extending between the evaporator outlet and the compressor inlet. The connections between an inlet port of the expansion valve and the high-pressure pipe, and between an outlet port of the expansion valve and the low-pressure pipe leading to an inlet of the evaporator are defined within the low-pressure return pipe. The low-pressure return pipe extending from the evaporator to the compressor accommodates the expansion valve, and the expansion valve is connected within the low-pressure return pipe to the high-pressure pipe and the evaporator inlet pipe. This largely reduces the number of refrigerant external leak-prone spots at mounting portions of the expansion valve. By forming the casing for housing the expansion valve integrally with the evaporator, it is even possible to further reduce the number of refrigerant external leak-prone spots at a juncture between the evaporator and the low-pressure return pipe.

### Brief description of the drawings:

- Fig. 1: is a cross-section of a mounting structure of an expansion valve (first embodiment),
- Fig. 2: is a section taken on line A-A of Fig. 1,
- Fig. 3: is a cross-section explaining the operation of the expansion valve mounted according to the first embodiment,
- Fig. 4: is a cross-section of a mounting structure (second embodiment),
- Fig. 5: is a section taken on line B-B of Fig. 4,
- Fig. 6: is a cross-section of a mounting structure (third embodiment),
- Fig. 7: is a cross-section of a mounting structure (fourth embodiment),
- Fig. 8: is a cross-section taken on line C-C of Fig. 7,
- Fig. 9: is a cross-section of a mounting structure (fifth embodiment),
- Fig. 10: is a section taken on line D-D of Fig. 9,
- Fig. 11: is a cross-section of a mounting structure (sixth embodiment),
- Fig. 12: is a section taken on line E-E of Fig. 11,
- Fig. 13: is a cross-section of a mounting structure (seventh embodiment),
- Fig. 14: is a cross-section of a mounting structure (eighth embodiment),
- Fig. 15A: is a cross-section of a mounting structure (ninth embodiment);
- Fig. 15B: is a section taken on line F-F of Fig. 15A,
- Fig. 16A: is a section in a plane containing the centre lines of high-pressure and low-pressure pipes, in a mounting structure (tenth embodiment),
- Fig. 16B: is a section taken on line G-G of Fig. 16A,
- Fig. 17A: is a cross-section of a mounting structure (eleventh embodiment),
- Fig. 17B: is a section taken on line H-H of Fig. 17A,
- Fig. 18: is a cross-section of a mounting structure (twelfth embodiment),
- Fig. 19: is a cross-section of a mounting structure (thirteenth embodiment),
- Fig. 20: is an exploded perspective view of a mounting structure.

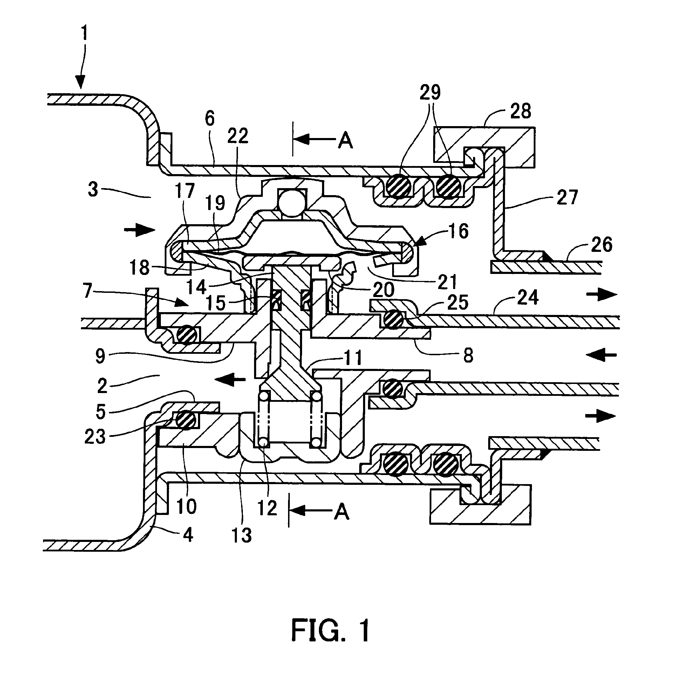

An evaporator 1 in Figs 1 to 3 is laminated of a plurality of aluminium plates, and has a header portion with a refrigerant inlet 2 to the evaporator and a refrigerant outlet 3. An inlet pipe 5 is integrally formed with the refrigerant inlet 2 by a pressing formation of an end plate 4 as a component of the evaporator 1. A hollow cylindrical casing 6 forms at least part of a low-pressure return pipe extending from the evaporator 1. The casing 6 is joined to the end plate 4 and encloses the openings of the inlet and outlet pipes 5, 3. The evaporator 1 is formed by simultaneously welding the laminated plates and the end plate 4 by an NB (Noncorrosive Flux Brazing) method by using fluoride-based flux within a nitrogen atmosphere in a furnace. At this time the casing 6 is also welded together, whereby the evaporator 1 and the casing 6 are formed integral with each other.

An expansion valve 7 is mounted in the casing 6. The expansion valve 7 has a body 10 with an inlet port 8 for high-pressure refrigerant and an outlet port 9 for low-pressure refrigerant. A valve hole communicates between the inlet and outlet ports 8, 9. A valve element 11 is disposed in the body 10 for opening and closing the valve hole. The valve element 11 is urged from a low pressure side in valve-closing direction by a spring 12. The spring 12 is received in an adjustment member 13 press-fitted into a lower end opening of the body 10. The load of the spring 12 is adjusted by the pressing-in depth of the adjustment member 13 in to the body 10 to adjust a desired the set value of the expansion valve 7. The valve element 11 is integral with a shaft 14 movably guided by the body 10. A V-ring 15 fitted on the shaft 14 prevents that high-pressure refrigerant may leak from the inlet port 8 into the casing 6 through a given clearance between the body 10 and the shaft 14.

A power element 16 is screwed into an upper end of the body 10. The power element 16 comprises an upper housing 17 and a lower housing 18, each made of thick metal, a diaphragm 19 made of a flexible thin metal plate disposed to divide the space enclosed by the upper and lower housings 17 and 18, and a centre disk 20. The space enclosed by the upper housing 17 and the diaphragm 19 forms a temperature-sensing chamber, which is filled with refrigerant gas. The centre disk 20 has an upper surface held in contact with the lower surface of the diaphragm 19. A lower surface of the centre disk 20 is held in contact with an protruding end surface of the shaft 14 so as to transmit displacements of the diaphragm 19 to the valve element 11. The lower housing 18 has a gas-passing hole 21 to introduce refrigerant passing through the casing 6 into the space below the diaphragm 19. The amount or flow rate of refrigerant to be introduced here may be adjusted by changing the size or number of the gas-passing hole 21. Further, a heat-insulating cover 22 made of resin or rubber covers the upper part of the power element 16.

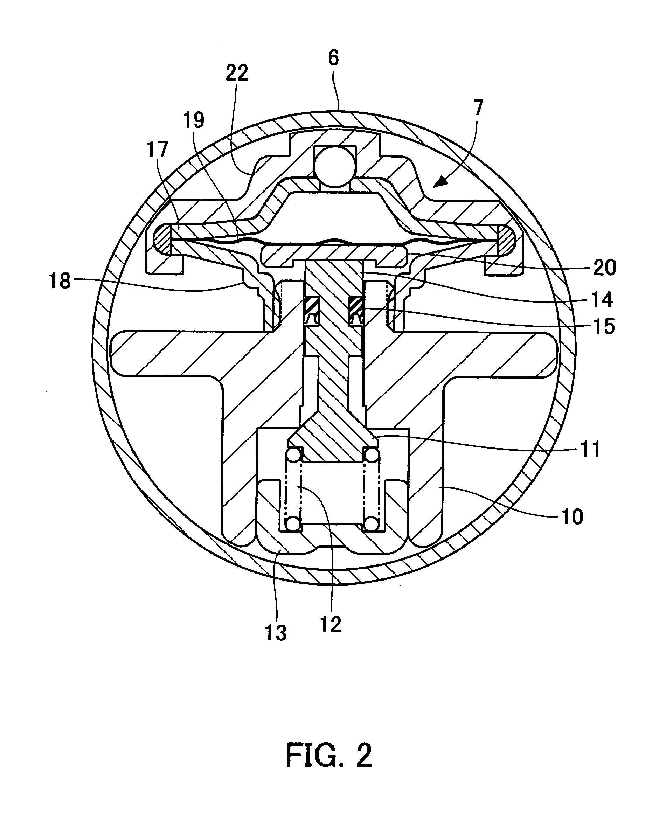

The outlet port 9 of the expansion valve 7 is fitted on the inlet pipe 5 of the evaporator 1 and is sealed by an O-ring 23. The inlet port 8 of the expansion valve 7 is fitted in a high-pressure pipe 24 extending from a receiver, and is sealed by an O-ring 25. The casing 6 is connected to a low-pressure pipe 26 extending to a compressor. In the illustrated first embodiment, an end portion of the low-pressure pipe 26 has a welded-on joint part 27 (as indicated by black triangles). The joint part 27 is connected to the casing 6 by a pipe clamp 28 and is sealed by two O-rings 29 so as to suppress external refrigerant leakage. The pipes 26 and 24 are formed by a concentric double-walled pipe such that the high-pressure pipe 24 is disposed within the low-pressure pipe 26. The expansion valve 7 is positioned in the centre of the casing 6. As shown in Fig. 2, the body 10 and the heat-insulating cover 22 have respective outer contours formed along the inner shape of the casing 6.

The expansion valve 7 is mounted in the casing 6 as follows: Since the evaporator 1 and the casing 6 are integrally welded with the inlet pipe 5 of the evaporator 1 protruding into the casing 6, first, the O-ring 23 is fitted on the inlet pipe 5, and then the expansion valve 7 is pushed into the casing 6 until the outlet port 9 is fitted on the inlet pipe 5. The O-ring 25 is fitted on the inlet port 8 of the expansion valve 7 in advance, or at this time. Next, the inlet port 8 is positioned such that it can be fitted in the high-pressure pipe 24, and the joint part 27 (having the O-rings 29 fitted beforehand in respective grooves formed by bending the end portion of the joint part 27) is pushed into the casing 6. Finally, connecting portions of the casing 6 and of the joint part 27 are connected by the pipe clamp 28.

More specifically, the expansion valve 7 is accommodated in the low-pressure return pipe from the evaporator 1, together with the high-pressure pipe 24 and the connecting portion thereof, and hence connecting portions from which refrigerant can leak out are limited to only the connecting portions connected by the pipe clamp 28. Since the high-pressure pipe 24 and the connecting portion thereof are accommodated in the casing 6, even if a minute amount of high-pressure refrigerant leaks via the O-ring 25, the refrigerant will remain in the low-pressure return pipe without the possibility to leak out into the atmosphere.

### Operation

When the automotive air conditioner is in stoppage, the gas filling the temperature-sensing chamber of the power element 16 is condensed. The pressure of the gas is low. As shown in Fig. 1, the diaphragm 19 is displaced inward. The valve element 11 places the expansion valve 7 in the fully closed state.

When then the automotive air conditioner is started, refrigerant is drawn by the compressor, and hence the pressure within the low-pressure return pipe drops. The power element 16 responds and the diaphragm 19 is displaced to lift the valve element 11 from the valve seat. On the other hand, refrigerant compressed by the compressor is condensed by a condenser, and liquid refrigerant obtained by gas/liquid separation in the receiver is supplied through the high-pressure pipe 24 to the inlet port 8 of the expansion valve 7. Arrows in the figures indicate the respective directions of refrigerant flows. The high-temperature, high-pressure liquid refrigerant is expanded while passing through the expansion valve 7 and flows out as a low-temperature, low-pressure gas-liquid mixture from the outlet port 9. This refrigerant is supplied through the inlet pipe 5 and the refrigerant inlet 2 to the evaporator 1, and is evaporated 1 until it flows out through the refrigerant outlet 3, and returns via the casing 6 and the low-pressure pipe 26 to the compressor.

A space enclosed by the diaphragm 19 and the lower housing 18 communicates with the inside of the casing 6 via the gas-passing hole 21, so that while refrigerant from the evaporator 1 is passing through the casing 6, some refrigerant is introduced into this space, so that the refrigerant temperature is detected by the power element 16.

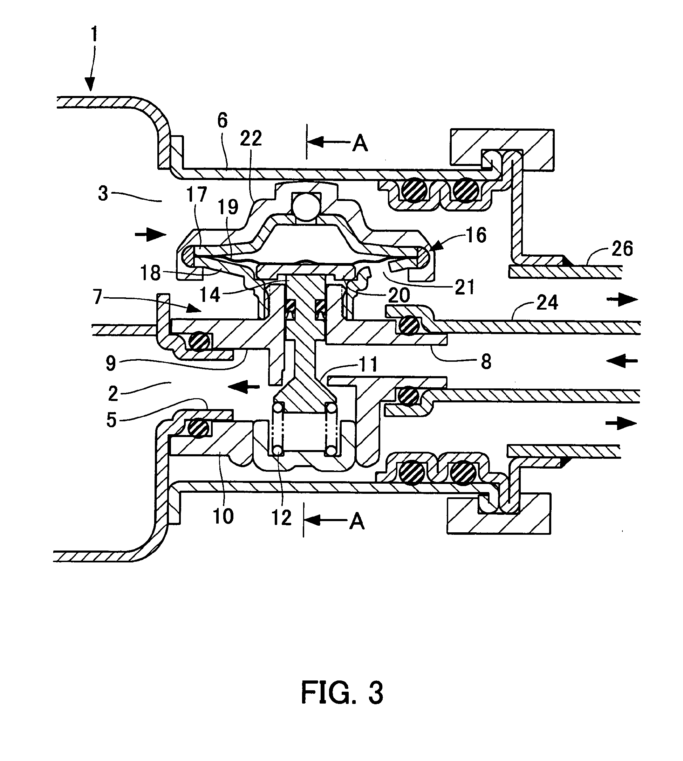

In an early stage after a start of the automotive air conditioner, the temperature of refrigerant returning from the evaporator 1 is high due to the heat exchange with high-temperature air in the compartment. The power element 16 senses the high refrigerant temperature, so that the pressure within the temperature-sensing chamber becomes high. As shown in Fig. 3, the diaphragm 19 is displaced in valve-opening direction until the centre disk 20 is brought into abutment with a shoulder of the lower housing 18. The expansion valve 7 is fully opened.

As with time the temperature of refrigerant from the evaporator 1 becomes lower, the pressure within the temperature-sensing chamber also becomes lower. Accordingly, the diaphragm 19 is displaced upward, the expansion valve 7 moves in valve-closing direction and controls the flow rate. At this time, the expansion valve 7 operates to detect the refrigerant temperature at the evaporator outlet, and controls the flow rate into the evaporator 1 such that the refrigerant maintains a predetermined degree of superheat. As a consequence, refrigerant in a superheated state is always returned to the compressor, which enables the compressor to operate efficiently.

Since the power element 16 is disposed in the low-pressure return pipe from the evaporator 1 such that the refrigerant temperature is detected by the entire power element 16, the power element 16 would have a very short temperature-sensing time constant. The response to a change in the temperature of refrigerant could become so sensitive as to perform an excessive feedback correction on the operation of the valve section, which could result in a periodic pressure variation (hunting). To eliminate this inconvenience, the heat-insulating cover 22 blocks the heat transfer to the upper housing 17 to thereby increase the temperature-sensing time constant of the power element 16.

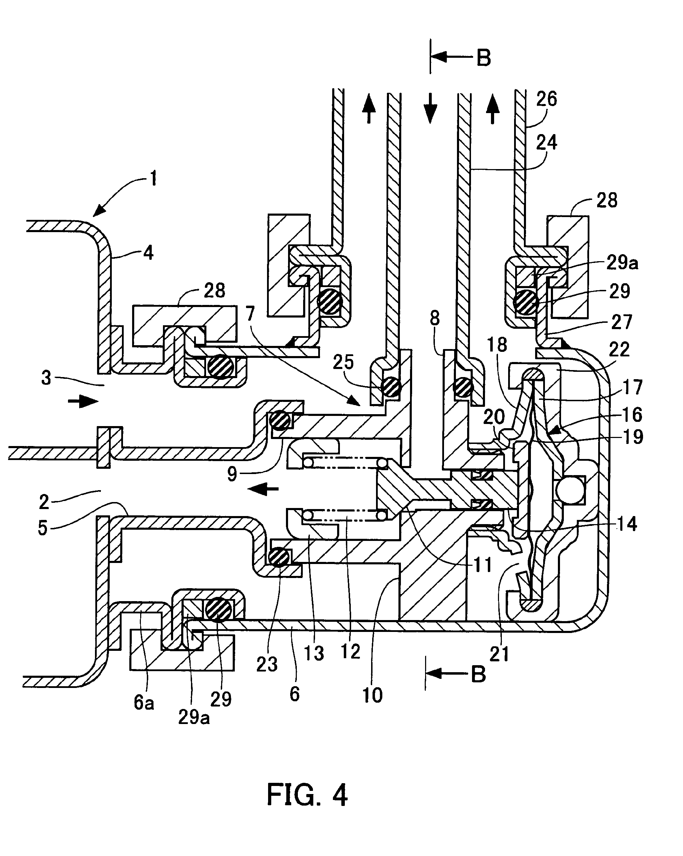

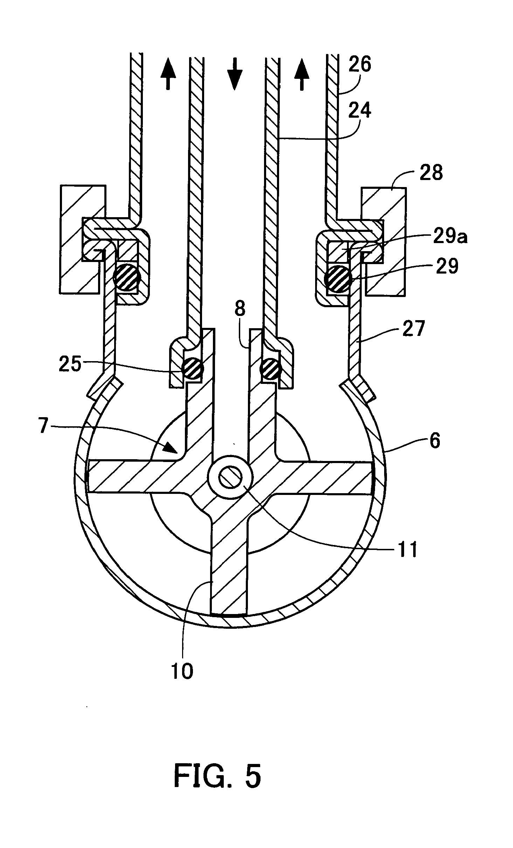

The mounting structure of the expansion valve in Figs 4 and 5 (second embodiment) differs from the first embodiment, in that the double pipe extends in a direction substantially orthogonal to the direction of the refrigerant inlet and outlet 2, 3 of the evaporator 1.

In many cases, the evaporator 1 is installed in a vehicle compartment such that an evaporator header portion having the refrigerant inlet 2 and the refrigerant outlet 3 is directed transversely to the vehicle's longitudinal direction. For this reason, the high-pressure pipe 24 and the low-pressure pipe 26 extending from an engine room into the compartment are required to be bent at right angles at the expansion valve 7 and the refrigerant outlet 3. To bend pipes at right angles necessitates space therefor, and hence, in the present embodiment, the direction of inflow of refrigerant and that of outflow of the same are already provided at right angles at the location where the expansion valve 7 is mounted.

The evaporator 1 is integrally formed with the inlet pipe 5 and a connecting part 6a by furnace brazing. The casing 6 is connected to the connecting part 6a by the pipe clamp 28, and the joint part 27 is welded to an upper portion, in Fig. 4, of the pipe clamp 28. The joint part 27 is connected to the low-pressure pipe 26 by the pipe clamp 28. Connecting portions of the joint part 27 and the low-pressure pipe 26 connected by the pipe clamp 28 are sealed by an O-ring 29 and a backup ring 29a for the O-ring 29.

The expansion valve 7 is mounted in the casing 6 and the joint part 27 having the openings facing in the respective directions orthogonal to each other. The inlet port 8 and the outlet port 9 are formed in the body 10 so that they face in the respective directions orthogonal to each other (substantially with a right angle). The body 10 has an outer shape which is extended in respective three directions up to the vicinity of the inner surface of the casing 6, (Fig. 5), which facilitates positioning the expansion valve 7, when inserting the same into the casing 6 and connecting the outlet port 9 to the inlet pipe 5.

The low-pressure return pipe from the evaporator is required to be formed into an L shape, and hence junctures which can be responsible for external leakage of refrigerant are two connections, i.e. a juncture between the connecting part 6a and a juncture between the joint part 27 and the low-pressure pipe 26.

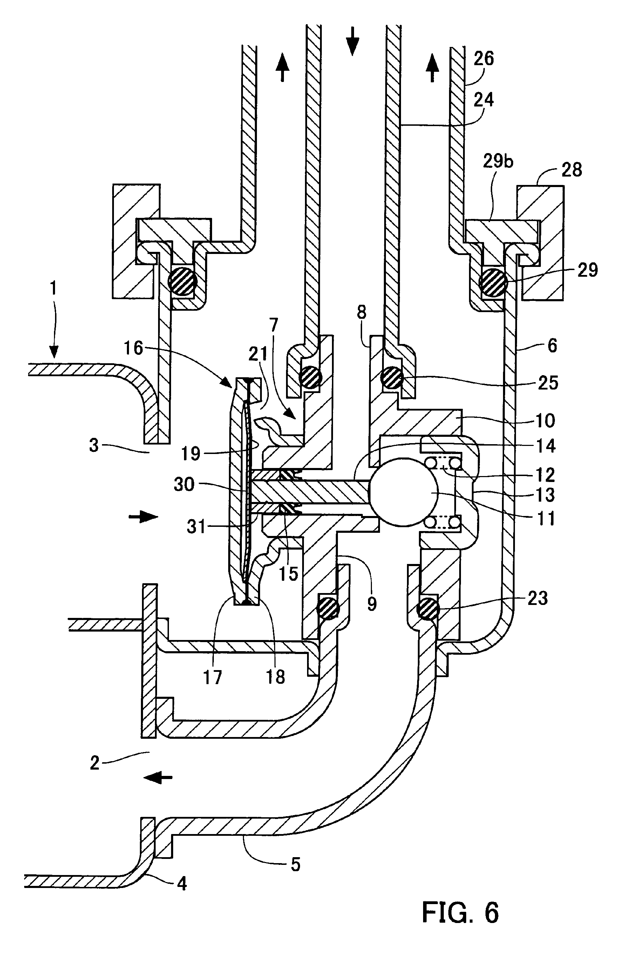

Similarly to the second embodiment, the mounting structure of the expansion valve in Fig. 6 (third embodiment) has an L-shaped structure in which the double pipe extends orthogonally to the direction of the refrigerant inlet 2 and outlet 3 of the evaporator 1. However, the mounting structure of the third embodiment differs from the second embodiment in that it has only one single connection from which refrigerant may leak out.

The evaporator 1, the inlet pipe 5, and the casing 6 are integrally formed by furnace brazing. At this time, the casing 6 and the inlet pipe 5 as well has hermetically joined parts. Further, the inlet pipe 5 and the casing 6 are independently joined to the refrigerant inlet 2 and the refrigerant outlet 3, respectively, such that the free end of the inlet pipe 5 bent at right angles extends into the casing 6. The casing 6 is connected to the low-pressure pipe 26 by fixing a backup ring 29b to an end face of the casing 6 by the pipe clamp 28 with the low-pressure pipe 26 inserted into the casing 6, and the O-ring 29 prevents refrigerant from leaking out from the low-pressure return pipe. This reduces the number of junctures of the low-pressure return pipe from the evaporator 1 to one.

The expansion valve 7 in the third embodiment has a different power element 16. The power element 16 comprises a temperature-sensing chamber formed by sandwiching the outer peripheral edge of the diaphragm 19 between the upper housing 17 and the lower housing 18 and welding them. A belleville spring 30 is provided within the temperature-sensing chamber. The belleville spring 30 assists the force of the gas filling in the temperature-sensing chamber, for pushing the diaphragm 19 outward according to a sensed temperature. The belleville spring 30 thus causes a pseudo-increase in the gas pressure. In the valve section a ball-shaped valve element 11 is joined to one end of the shaft 14 by spot welding. A pipe 31 is fitted on the other end of the shaft 14. The pipe 31 is slidably guided in the body 10 . The shaft 14 and the pipe 31 are held in contact with the diaphragm 19 of the power element 16. The V-ring 15 is fitted on a reduced-diameter portion of the shaft 14 adjacent to the pipe 31 and is held by the pipe 31 for preventing high-pressure refrigerant from leaking into the low-pressure return pipe.

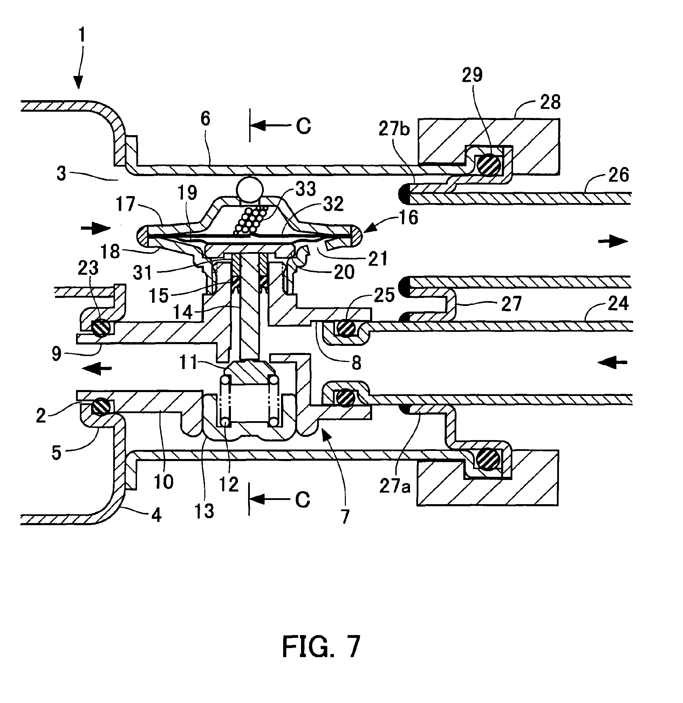

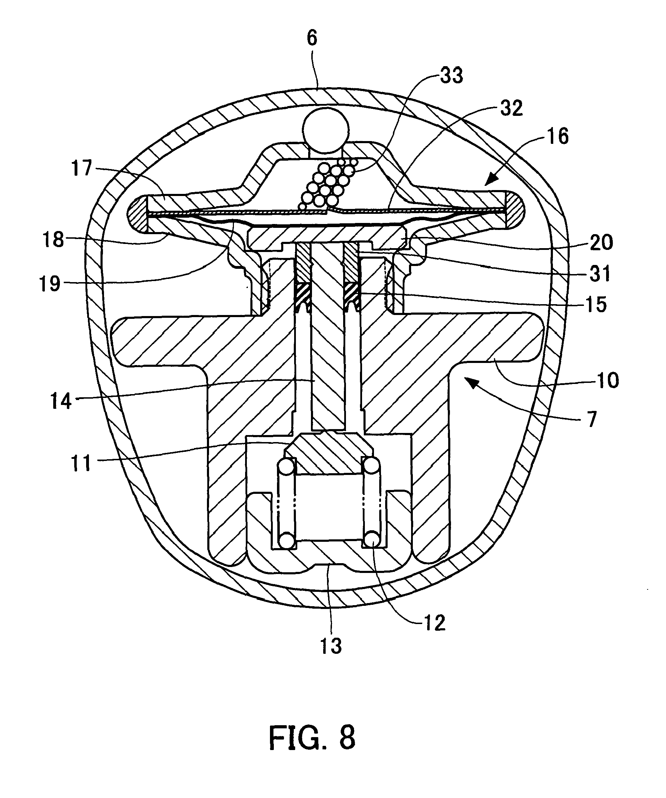

The mounting structure of the expansion valve in Figs 7 and 8 (fourth embodiment) differs from the first embodiment, in that the high-pressure pipe 24 and the low-pressure pipe 26 extending toward a compressor from the expansion valve 7 are not defined by a double pipe.

Respective end portions of the high-pressure pipe 24 and the low-pressure pipe 26 are connected to the joint part 27 through an end treatment by welding. The joint part 27 has two hollow cylindrical parts 27a and 27b integrally formed by pressing. The end face of the hollow cylindrical part 27a and a peripheral surface of the high-pressure pipe 24 are welded in a state where the high-pressure pipe 24 is inserted through the hollow cylindrical part 27a, and the end face of the hollow cylindrical part 27b and that of the low-pressure pipe 26 are welded in a state where the low-pressure pipe 26 is inserted into the hollow cylindrical part 27b to seal joining portions of the joint part 27 to the high-pressure pipe 24 and the low-pressure pipe 26. Further, the joint part 27 is connected to the casing 6 by the pipe clamp 28, and a juncture therebetween is sealed by the O-ring 29. The casing 6 in Fig. 8 has an oval cross section so as to facilitate guiding insertion of the expansion valve 7 and positioning performed for connection between the outlet port 9 of the expansion valve 7 and the inlet pipe 5 of the evaporator 5. In the structure the number of junctures of the low-pressure return pipe extending from the evaporator 1 is reduced to one.

The expansion valve 7 is different because it has a retainer 32 in the temperature-sensing chamber formed by the upper housing 17 and the diaphragm 19 of the power element 16. Activated carbon 33 is filled in a space between the retainer 32 and the upper housing 17. The activated carbon 33 converts temperature into pressure utilizing its adsorption characteristic. The activated carbon 33 determines the pressure within the temperature-sensing chamber in accordance with a change in the detected temperature. Further, due to the low thermal conductivity of the activated carbon it takes much time before the pressure changes in response to a change in temperature. This makes it possible to dispense with the previously mentioned heat-insulating cover 22.

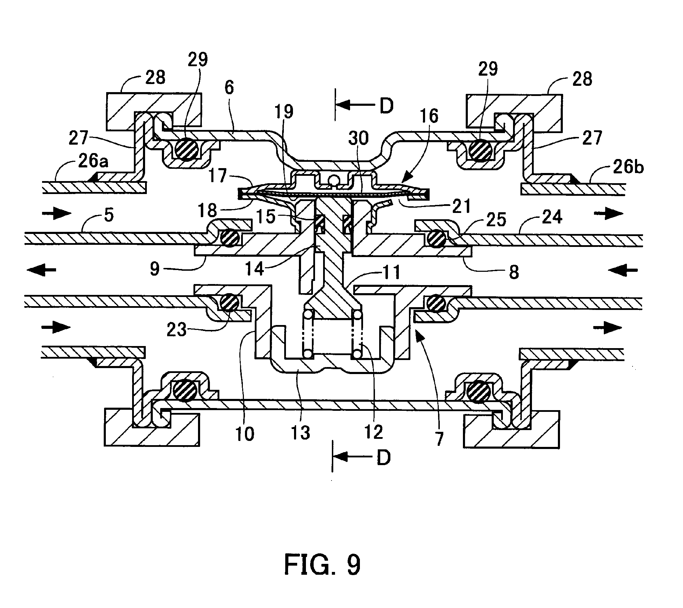

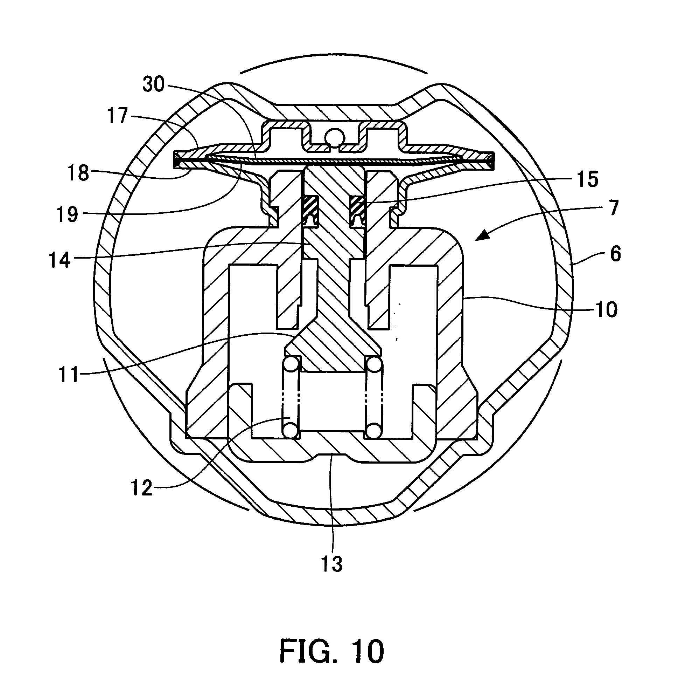

In the mounting structure of the expansion valve in Figs 9 and 10 (fifth embodiment) the expansion valve 7 is mounted in a low-pressure pipe extending between the vehicle compartment in which the evaporator 1 is installed and the engine room in which the compressor and the receiver are installed. The expansion valve 7 is mounted in the low-pressure pipe of the structure in which not only the high-pressure pipe 24 and the low-pressure pipe 26 but also the inlet pipe 5 and the low-pressure pipe 26 are formed by a double pipe.

The casing 6 with the expansion valve 7 is connected between an evaporator-side low-pressure pipe 26a and a compressor-side low-pressure pipe 26b. The high-pressure pipe 24 is connected to the inlet port 8, and the inlet pipe 5 of the evaporator is connected to the outlet port 9. For this reason, each of the low-pressure pipes 26a and 26b has an end to which the joint part 27 is welded in advance so that the low-pressure pipes 26a and 26b can be easily connected to the casing 6. The number of junctures of the low-pressure return pipe extending from the evaporator 1 and having the expansion valve 7 mounted therein is reduced to two.

In Fig. 10, the casing 6 is partially deformed inwardly, e.g. at three circumferential regions, such that the expansion valve 7 will be guided while being inserted, and such that the expansion valve 7 maintains a predetermined position in the casing 6. An upper central portion of the casing 6 is formed into a recessed shape adapted to the shape of the top of the power element 16. Portions of the casing 6 corresponding to the legs of the body 10 are curved along the outer shape of the legs so that the motion of each leg is restricted.

The belleville spring 30 is provided in the temperature-sensing chamber of the power element 16. The upper housing 17 of the power element 16 has a hole for filling gas into the temperature-sensing chamber. After that, the hole is sealed by resistance welding of a metal ball. A portion surrounding the hole is recessed so that the metal ball does not protrude beyond the top surface of the upper housing 17.

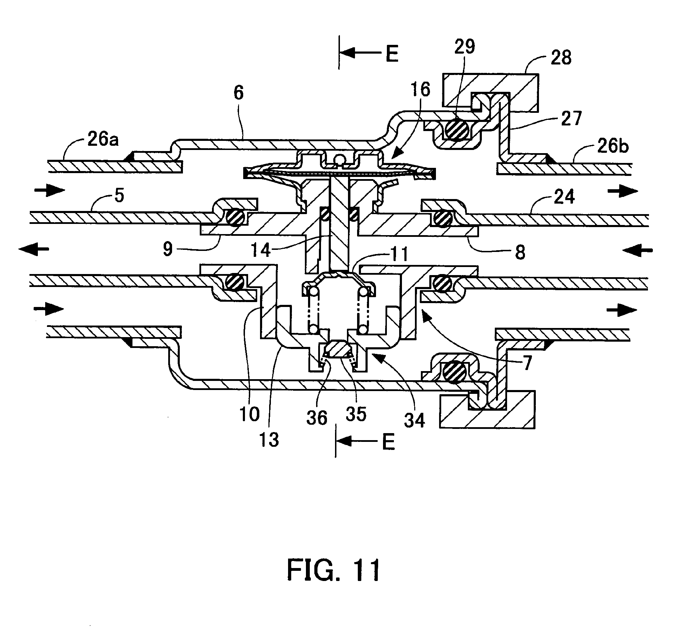

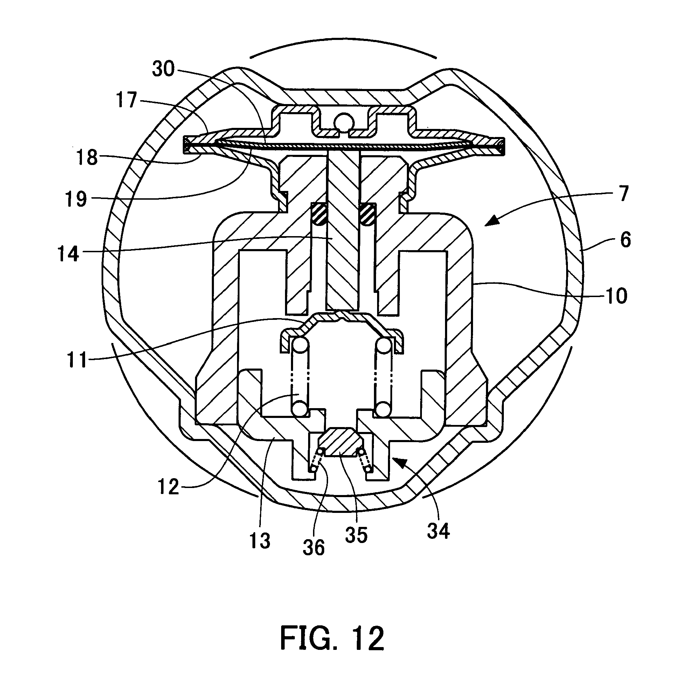

The mounting structure of the expansion valve in Figs 11 and 12 (sixth embodiment) differs from the fifth embodiment in that the number of junctures is reduced to one. The evaporator-side low-pressure pipe 26a and the casing 6 are welded in advance, whereby only the one juncture of the low-pressure return pipe is defined which pipe extends from the evaporator 1.

The power element 16 is fixed to the body 10 by swaging. Further, this expansion valve 7 has the valve element 11 formed to a disk-shape by pressing or stamping. The valve element 11 is fixed at an end face of the shaft 14 by spot welding. The adjustment member 13 is provided with a differential pressure control valve 34 operated by a differential pressure between the inlet and outlet pressures of the evaporator 1. The differential pressure control valve 34 comprises a valve element 35 disposed on the low-pressure return pipe side of a valve hole formed through the adjustment member 13, and a spring 36 urging the valve element 35 in valve closing direction. The differential pressure control valve 34 opens when the refrigeration load is so high as to make the differential pressure across the evaporator 1 higher than a predetermined value, and to supply refrigerant having high moisture into the low-pressure return pipe, thereby lowering the temperature of refrigerant returned to the compressor. This operation of the differential pressure control valve 34 is necessitated for the following reason: The expansion valve 7 controls the flow rate to the evaporator 1, such that refrigerant at the evaporator outlet 1 maintains a predetermined degree of superheat, to assure that refrigerant to be returned to the compressor has a predetermine degree of superheat. However, since the high-pressure pipe 24 and the low-pressure pipe 26b are defined by a double-pipe structure, the refrigerant already having the predetermined degree of superheat will be heated further, while flowing through the low-pressure pipe 26b, by refrigerant flowing through the high-pressure pipe 24. The differential pressure control valve 34 is provided to prevent that the temperature of refrigerant compressed by the compressor becomes excessively high due to the double-pipe structure.

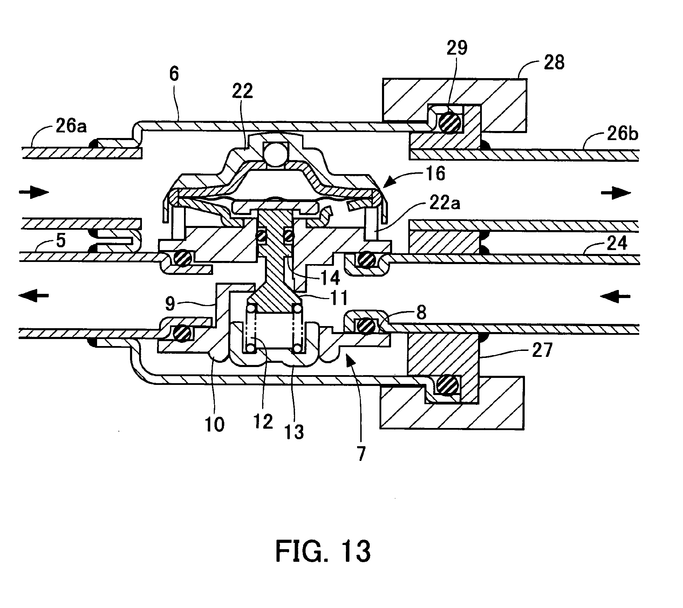

The mounting structure of the expansion valve in Fig. 13 (seventh embodiment) differs from the fifth and sixth embodiments in that the high-pressure pipe 24 and the inlet pipe 5 of the evaporator 1 are formed separately from the respective low-pressure pipes 26a and 26b.

Respective ends of the inlet pipe 5 and the low-pressure pipe 26a are integrally joined to the casing 6 e.g. by welding, and the end of the high-pressure pipe 24 opposed to that of the inlet pipe 5 and the end of the low-pressure pipe 26b opposed to that of the low-pressure pipe 26a are rigidly joined to a disk-shaped joint part 27 by welding. The casing 6 and the joint part 27 are connected by the pipe clamp 28. The number of junctures of the low-pressure return pipe extending from the evaporator 1 is reduced to one.

The expansion valve 7 in the first to sixth embodiments acts in valve opening direction when it receives high-pressure refrigerant, whereas the expansion valve 7 in the seventh embodiment acts in valve closing direction when it receives high-pressure refrigerant. The heat-insulating cover 22 on the power element 16 is integrally formed with fixing legs 22a by resin-moulding. Although not shown, each fixing leg 22a has a hook formed at an end thereof, and the hook is engaged with a stepped portion formed in the body 10, whereby the heat-insulating cover 22 is fixed in position when being clipped on.

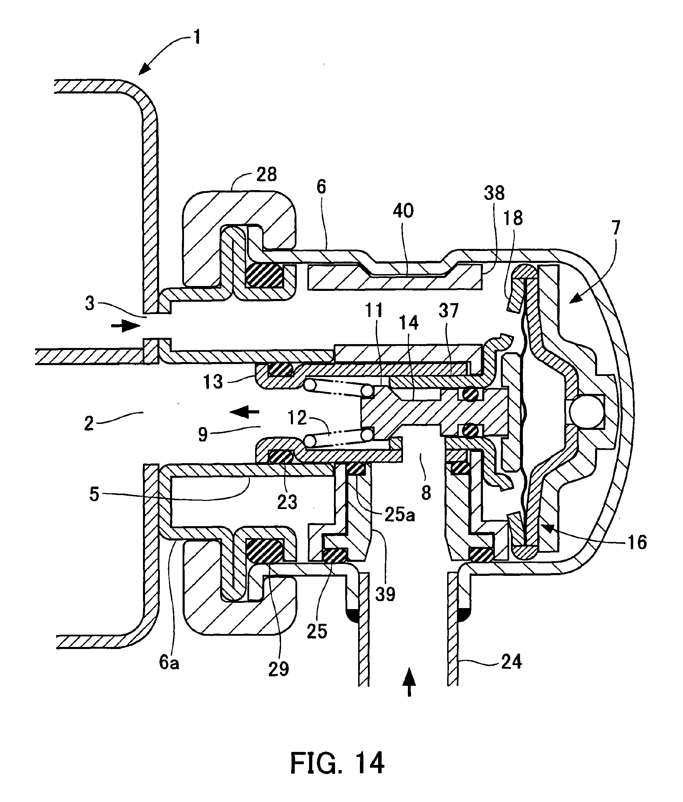

The mounting structure of the expansion valve in Fig. 14 (eighth embodiment) differs from the second and third embodiments in that the high-pressure pipe 24 and the low-pressure pipe 26 are formed as separate members. Respective ends of the pipes are welded to the casing 6 which is hollow and cylindrical and closed at one end. Although not shown, the low-pressure pipe 26 is welded to the casing 6 at a surface of the casing 6 facing in a direction at right angles to the drawing plane of Fig. 14.

The eighth embodiment further differs from other embodiments with respect to the connection between the inlet port 8 of the expansion valve 7 and the high-pressure pipe 24 and the connection between the outlet port 9 of the expansion valve 7 and the inlet pipe 5 of the evaporator 1, within the casing 6. In the expansion valve 7, a hollow cylindrical valve body 37 axially movably holding the shaft 14 integrally formed with the valve element 11 is integrally formed with the lower housing 18 of the power element 16. The end face of the valve body 37 defines a valve seat. The hollow cylindrical adjustment member 13 is press-fitted on the outer side of the valve body 37. The adjustment member 13 has a bent end defining a groove for the O-ring 23, and an inner stepped portion defining a receiver for the spring 12 adjusting the set value of the expansion valve 7.

The valve body 37 is held by a resin body 38. The resin body 38 houses a collar 39 and the O-rings 25 and 25a. The collar 39 connects between the inlet port 8 formed on the curved surface of the expansion valve 7 and an opening formed in the curved casing 6 and connected with the high-pressure pipe 24, with the connecting portions sealed by the O-rings 25 and 25a. The resin body 38 has a peripheral recessed part 40 diametrically opposite to the side where the collar 39 is housed. After the expansion valve 7 is inserted into the casing 6, the casing 6 is deformed inwardly by swaging toward the recessed part 40 of the resin body 38 on the diametrically opposite side of the casing 6 from the opening connected with the high-pressure pipe 24. The resin body 38 is pressed toward the opening connected with the high-pressure pipe 24. This not only facilitates insertion of the expansion valve 7 already equipped with the O-ring 25a into the casing 6, before the swaging stop, but further ensures sealing the connection between the inlet port 8 and the high-pressure pipe 24 by the O-ring 25a, after the swaging.

The inlet pipe 5 of the evaporator 1 is integrally formed with the connecting part 6a and is joined to the evaporator 1. The connection between the inlet pipe 5 and the outlet port 9 of the expansion valve 7 is made by inserting the adjustment member 13 forming the outlet port 9 into the inlet pipe 5. The necessary sealing effect is achieved by the O-ring 23.

Since the high-pressure pipe 24 and the low-pressure pipe 26 are welded to the casing 6, and the casing 6 is connected by the pipe clamp 28 to the connecting part 6a integrally formed with the evaporator 1, the number of junctures of the low-pressure return pipe extending from the evaporator 1 is reduced to one.

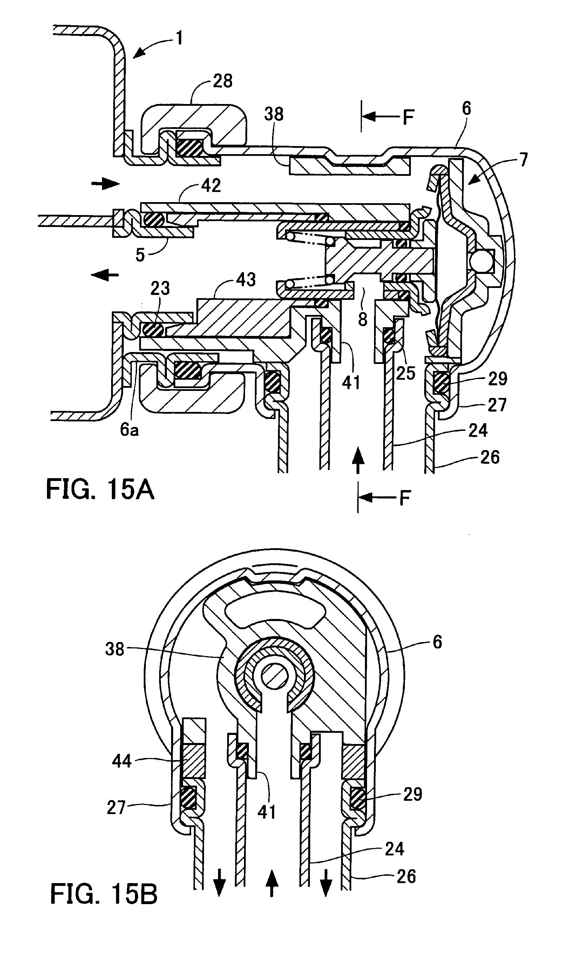

The mounting structure of the expansion valve in Figs 15A and 15B (ninth embodiment) is similar to the second and third embodiments. The high-pressure pipe 24 and the low-pressure pipe 26 are formed by a double pipe. The low-pressure pipe 26 and the casing 6 are joined to each other by the O-ring 29 and by swaging. The casing 6 is formed by pressing integrally with a hollow cylindrical joint part 27 extending outward from the peripheral surface of the hollow cylindrical portion thereof. The resin body 38 housing the expansion valve 7 is integrally formed with an hollow cylindrical inlet part 41 located at the inlet port 8 of the expansion valve 7 and connected to the high-pressure pipe 24, and an hollow cylindrical outlet part 42 connected to the inlet pipe 5 of the evaporator 1. An O-ring supporting member 43 is fitted in the outlet hollow cylindrical part 42.

The resin body 38 has a hollow cylindrical outer shape so as to be inserted from the open end into the hollow cylindrical casing 6, while the foremost end of the low-pressure pipe 26 has a flat end face. A washer 44 having a non-uniform circumferential thickness is interposed between the resin body 38 and the low-pressure pipe 26 so as to accommodate the difference in shape between the connecting portions of the two.

When inserting the expansion valve 7 into the casing 6, first, the resin body 38 equipped with the expansion valve 7 is inserted from the open end of the casing 6 on the side for connection to the connecting part 6a joined to the evaporator 1. Then the double pipe of the high-pressure pipe 24 and the low-pressure pipe 26 is inserted into the joint part 27 of the casing 6. At this time, the high-pressure pipe 24 is fitted on the inlet hollow cylindrical part 41 of the resin body 38, and is sealed by the O-ring 25. Next, the open end of the joint part 27 is swaged, and the surface of the casing 6 on the opposite side from the joint part 27 is swaged toward the joint part 27. Thereafter, the casing 6 with the inserted expansion valve 7 is fitted on the connecting part 6a of the evaporator 6. At this time, the outlet hollow cylindrical part 42 of the resin body 38 is connected to the inlet pipe 5 of the evaporator 1 in a state sealed by the O-ring 23. Then, the open end portion of the casing 6 and the connecting part 6a of the evaporator 1 are connected by the pipe clamp 28. The number of junctures, from which refrigerant can leak out, of the low-pressure return pipe extending from the evaporator 1 at a location where the expansion valve 7 is mounted is reduced to two.

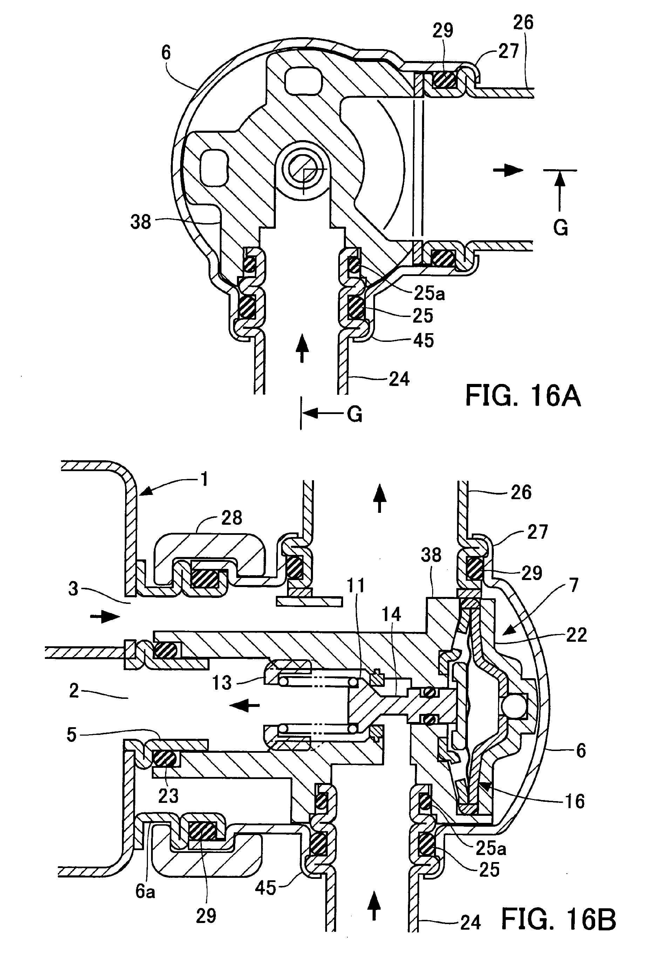

The mounting structure of the expansion valve in Figs 16A and 16B (tenth embodiment) differs from the ninth embodiment, in that the high-pressure pipe 24 and the low-pressure pipe 26 are joined to the casing 6 by the respective O-rings 25 and 29 and by swaging. The casing 6 has a hollow cylindrical portion with sides which are integrally formed with the joint part 27 and a joint part 45 both extending outward in respective directions orthogonal to each other. The high-pressure pipe 24 has a foremost end provided with the two O-rings 25 and 25a for sealing between the inlet hollow cylindrical part 41 of the resin body 38 and the casing 6, and is joined to the casing 6 by the O-ring 25a and by swaging of the joint part 45. The low-pressure pipe 26 is joined to the casing 6 by the O-ring 29 and by swaging of the joint part 27. The number of junctures, from which refrigerant can leak out, of the low-pressure return pipe at a location where the expansion valve 7 is mounted is reduced to two.

The expansion valve 7 in the tenth embodiment has the resin body 38 with a valve seat formed by an inserted ring. The resin body 38 movably guides the shaft 14 which is integral with the valve element 11. The adjustment member 13 is screwed into the resin body 38, for adjusting the set value. The power element 16 is rigidly secured to the resin body 38 also by an engagement of the heat-insulating cover 22.

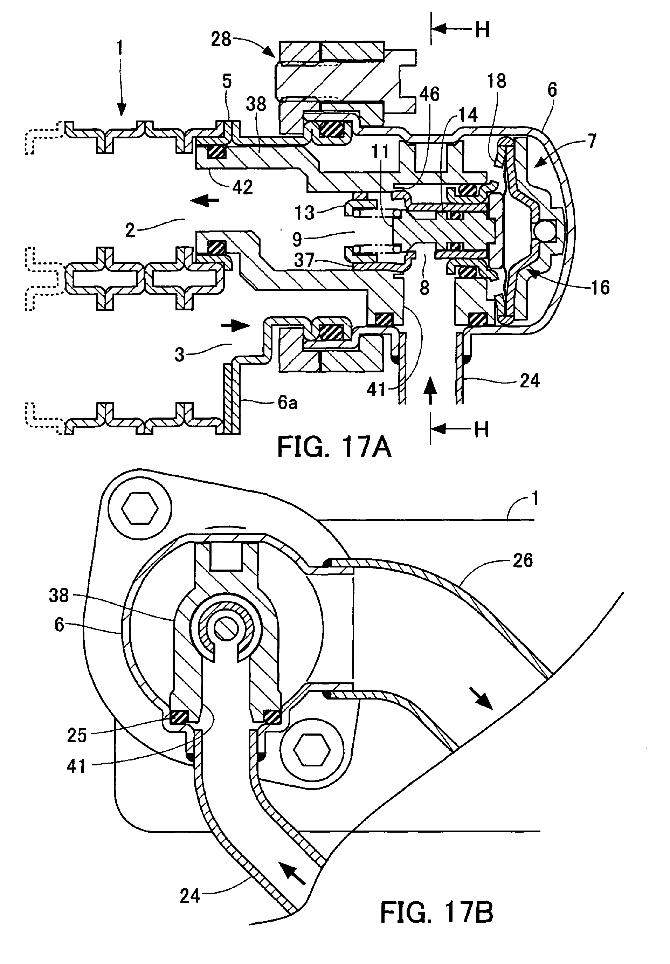

The mounting structure of the expansion valve in Figs 17 and 17B (eleventh embodiment) differs from the eighth embodiment in that the method of sealing between the inlet port 8 and the outlet port 9 of the expansion valve 7 is changed. The expansion valve 7 is connected via the resin body 38 to the high-pressure pipe 24 and the inlet pipe 5 of the evaporator 1. Sealing between the inlet port 8 and the outlet port 9 after mounting of the expansion valve 7 in the resin body 38 is made by a lip 46. The lip 46 is integrally formed with the resin body 38 as a thin hollow cylindrical portion at the peripheral edge of an opening between the inlet port 8 and the outlet port 9 of the expansion valve 7 in which the valve section is press-fitted. This makes it possible to dispense with one of the O-rings.

In the expansion valve 7 the hollow cylindrical valve body 37 axially guides the shaft 14 which is integral with the valve element 11. The valve body 37 and has a stepped portion in a central region of as a valve seat and is press-fitted into the lower housing 18 of the power element 16. The adjustment member 13 is press-fitted into the other end of the valve body 37, for adjusting the set value. A portion of the valve body 37 sealed by the lip 46 is tapered to form a wedge in press-fitting direction.

The pipe clamp 28 connecting between the connecting part 6a welded to the evaporator 1 and the casing 6 is formed by two engaging plates engaging in the opening edges of the connecting part 6a and of the casing 6. A bolt, as shown in Fig. 17 by way of example, also might be provided.

As shown in Fig. 17B, in a juncture between the high-pressure pipe 24 and the inlet hollow cylindrical part 41 of the resin body 38 for introducing high-pressure refrigerant into the expansion valve 7, a portion of the casing 6 where the high-pressure pipe 24 is welded and its vicinity are provided with a flat surface. This prevents that the shape of the O-ring 25 sealing between the inner surface of the casing 6 and the inlet hollow cylindrical part 41 will be changed between when the expansion valve 7 is inserted into the casing 6 and when sealing is effected by deforming the casing 6 from a side diametrically opposite to a side where the high-pressure pipe 24 is welded, so as to press the inlet hollow cylindrical part 41 of the resin body 38 toward the high-pressure pipe 24. This makes it possible to improve the assemblability.

The refrigerant inlet 2 and the refrigerant outlet 3 of the evaporator 1 are arranged in parallel in a plurality of laminated plates and end plates. The expansion valve 7 mounted in the resin body 38 is connected to the refrigerant inlet 2 and the refrigerant outlet 3 arranged in parallel, by way of example, as shown in Fig. 17A. When the refrigerant inlet 2 and the refrigerant outlet 3 of the evaporator 1 are thus arranged in parallel, the outlet hollow cylindrical part 42 of the resin body 38 for connecting the outlet port 9 of the expansion valve 7 to the inlet pipe 5 of the evaporator 1 is made eccentric toward the inlet pipe 5 with respect to the centre of the expansion valve 7.

At the location where the expansion valve 7 is mounted, the low-pressure return pipe has only one juncture from which refrigerant can leak out at a location where the connecting part 6a and the casing 6 are connected by the pipe clamp 28.

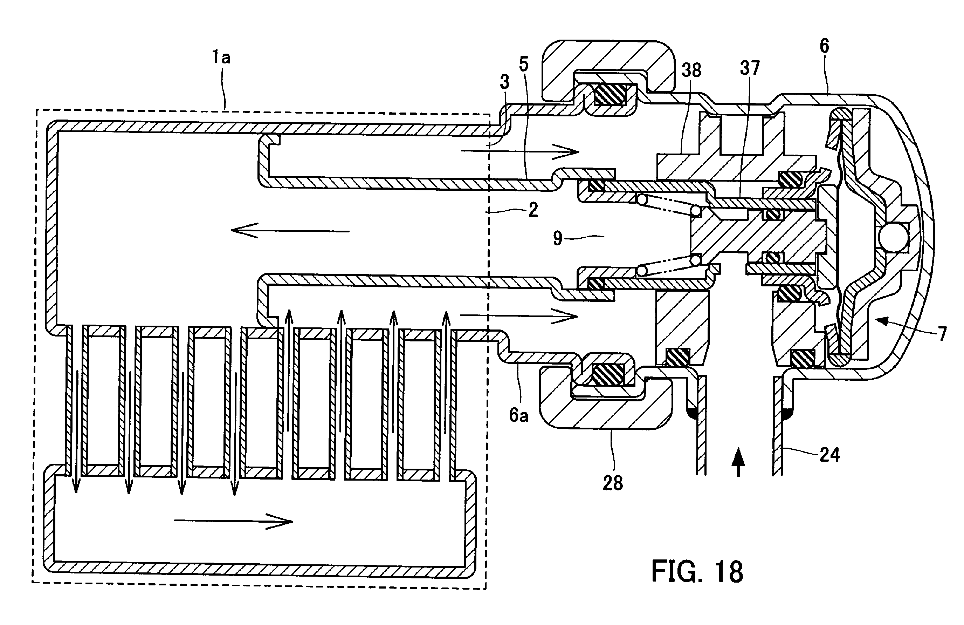

The mounting structure of the expansion valve in Fig. 18 (twelfth embodiment) differs from the eleventh embodiment in that the evaporator 1a has the refrigerant inlet 2 and the refrigerant outlet 3 concentrically arranged. The expansion valve 7 is disposed within the casing 6 such that the outlet port 9 is coaxial with the inlet pipe 5 of the evaporator 1a.

The evaporator 1a comprises two header portions and a core portion connecting the header portions by a plurality of pipes. The juncture of one of the header portions with the casing 6 and the expansion valve 7 has a double-pipe structure. The inlet pipe 5 (the inner pipe of the double pipe) extends into the header portion up to an intermediate portion. The foremost end portion of the inlet pipe 5 partitions the header portion into two sections in longitudinal direction. One half of the header portion on the connection side forms a return collection space, and the other half forms a forward collection space.

Although the expansion valve 7 in the twelfth embodiment is similar to the expansion valve 7 in the eleventh embodiment, the expansion valve 7 is configured in Fig. 18 such that the valve body 37 is press-fitted into the resin body 38 instead of providing the lip 46 to thereby dispense with an O-ring. The valve body 37 is connected to the inlet pipe 5 of the evaporator 1a. Further, although not shown, the low-pressure pipe 26 is welded to the casing 6 in a direction at right angles to the drawing plane of Fig. 18.

At the location where the expansion valve 7 is mounted, the low-pressure return pipe has only one juncture from which refrigerant can leak out at a location where the connecting part 6a and the casing 6 are connected by the pipe clamp 28.

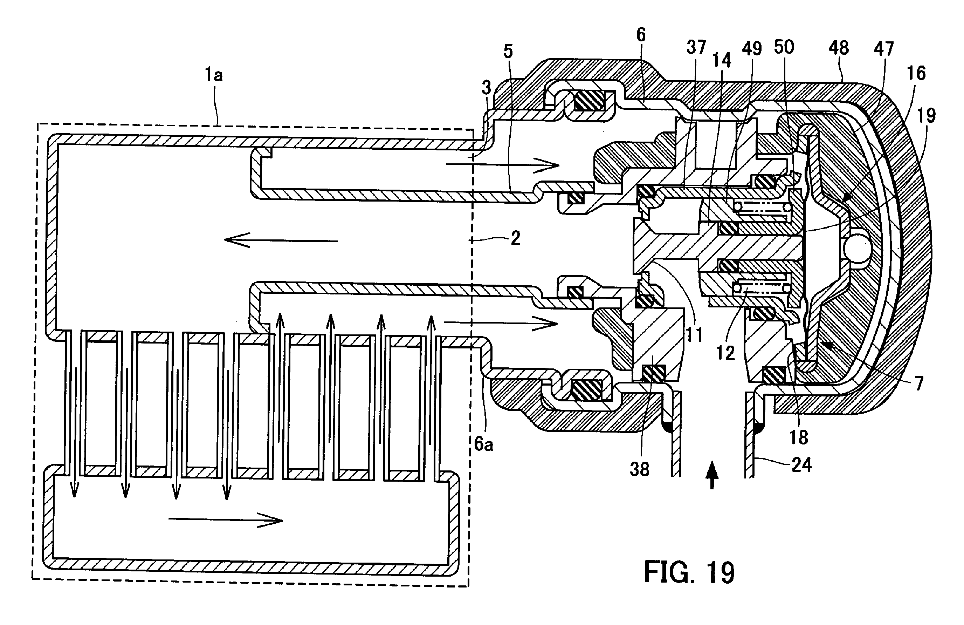

The mounting structure of the expansion valve in Fig. 19 (thirteenth embodiment) differs from the twelfth embodiment in that the expansion valve 7 and the casing 6 are configured to be sound-insulating. The connecting part 6a and the casing 6 are connected to each other by swaging.

The expansion valve 7 is covered by a soundproofing member 47, and the casing 6 is covered by a soundproofing member 48. These soundproofing members 47 and 48 are made of a material which has large mass and a main content of rubber. The soundproofing member 47 also functions as a heat-insulating cover for adjusting the temperature-sensing time constant of the power element 16 of the expansion valve 7. The expansion valve 7 generally generates flow noise when throttling and expanding refrigerant. Since the expansion valve 7 together with the evaporator 1a is disposed in the vehicle compartment, noise is directly emitted into the vehicle compartment, which becomes a factor that largely impairs the quietness in the vehicle compartment. By covering the expansion valve 7 with the soundproofing member 47, flow noise emitted from the expansion valve 7 is absorbed and attenuated. Since also the casing 6 is covered by the soundproofing member 48, it is possible to further reduce noise or the sound pressure.

The casing 6 is not removably connected to the connecting part 6a of the evaporator 1a by the pipe clamp, but is connected to the evaporator 1a by swaging.

In the expansion valve 7 the valve body 37 is integrally formed with the lower housing 18 of the power element 16. The end face of the valve body 37 defines a valve seat. A hollow cylindrical guide 49 axially guiding the shaft 14 integrally formed with the valve element 11 is press-fitted into the valve body 37. The guide 49 guides a hollow cylindrical member 50 into which the shaft 14 is press-fitted. The hollow cylindrical member 50 has a flange portion at one end. The flange portion, and the flange portion functions as both the centre disk receiving the diaphragm 19 and the spring receiver for the spring 12 urging the valve element 11 in valve closing direction.

Although the soundproofing member 47 insulates noise from the expansion valve 7 by covering the expansion valve 7, the casing 6 may be lined with the soundproofing member 47 except for portions which are in contact with the resin body 38.

Since the high-pressure pipe 24 and the low-pressure pipe 26 are welded to the casing 6, and the casing 6 is connected to the connecting part 6a integrally formed with the evaporator 1 by swaging, the low-pressure return pipe from the evaporator 1 has only one juncture.

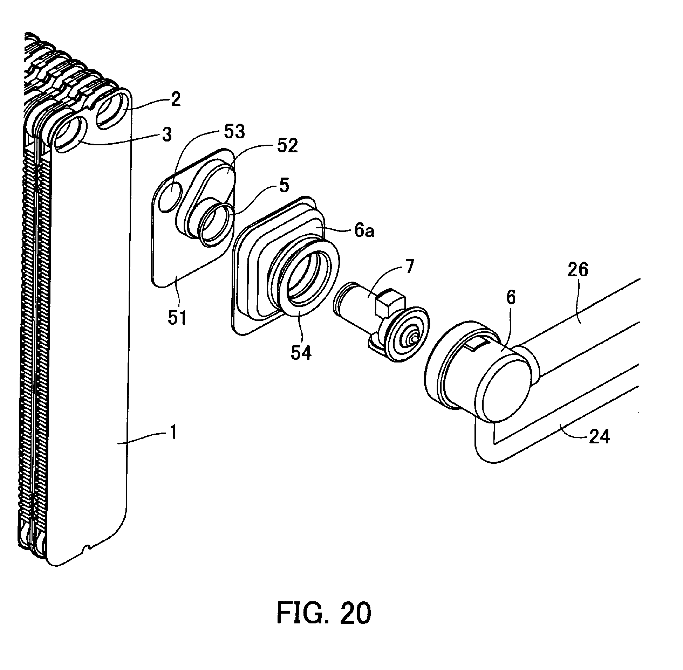

The mounting structure of the expansion valve in Fig. 20 (fourteenth embodiment) differs from the eleventh embodiment in that between the evaporator 1 having the refrigerant inlet 2 and the refrigerant outlet 3 formed in parallel and the connecting part 6a to which is connected the casing 6 housing the expansion valve 7, there is interposed a member for forming a flow passage through which refrigerant from the expansion valve 7 is guided to the refrigerant inlet 2. More specifically, between the evaporator 1 and the connecting part 6a, there is disposed a base plate 51. The base plate 51 has an elliptical cup-shaped member 52 which extends thereon from an approximately central portion thereof to a corner thereof associated with the refrigerant inlet 2 of the evaporator 1, and is open toward the evaporator 1,. The cup-shaped member 52 has an opening at a location corresponding to the approximately central portion of the base plate 51. The inlet pipe 5 surrounds the opening. The base plate 51 has a hole 53 at a location corresponding to the refrigerant outlet 3 of the evaporator 1.

The connecting part 6a is shaped such that when overlaid on the base plate 51, the connecting part 6a covers the cup-shaped member 52, the inlet pipe 5, and the hole 53. A connecting end 54 is formed in a central portion for connection with the casing 6 concentric with the inlet pipe 5. The high-pressure pipe 24 and the low-pressure pipe 26 are welded to the peripheral surface of the casing 6.

The base plate 51 and the connecting part 6a are integral with the evaporator 1 by furnace brazing. The expansion valve 7 is inserted in the casing 6, in advance, and the casing 6 is then deformed inward from a diametrically opposite side of the casing 6 from a portion to which the high-pressure pipe 24 is welded to connect the inlet port to the high-pressure pipe 24. In assembling, the expansion valve 7 received within the casing 6 is inserted from the connecting end 54 of the connecting part 6a, whereby the portion of the expansion valve 7 formed with the outlet port is pushed into the inlet pipe 5. Thereafter, the connecting end 54 and the casing 6 are connected either by a pipe clamp or by swaging the open end of the casing 6. High-pressure liquid refrigerant introduced from the high-pressure pipe 24 is throttled and expanded by the expansion valve 7 into atomized low-pressure refrigerant. The atomized low-pressure refrigerant is introduced via the inlet pipe 5 and the cup-shaped member 52 to the refrigerant inlet 2 of the evaporator 1. Refrigerant evaporated by the evaporator 1 is introduced via the refrigerant outlet 3 and the hole 53 of the base plate 51 into a space within the connecting part 6a and a space within the casing 6 and then flows to the low-pressure pipe 26. At this time, the expansion valve 7 senses the temperature and pressure of the refrigerant flowing to the low-pressure pipe 26 and controls the flow rate to the evaporator 1.

In the fourteenth embodiment as well, since the high-pressure pipe 24 and the low-pressure pipe 26 are welded to the casing 6, and the casing 6 is connected to the connecting part 6a which is integral with the evaporator 1 by the pipe clamp or by swaging, the low-pressure return pipe from the evaporator 1 has only one juncture.

Although in the first to thirteenth embodiments, different expansion valves 7 are shown, the expansion valves 7 are only examples, without limitation for the shown mounting structures.

## Claims

1. A mounting structure of an expansion valve (7) in a refrigeration cycle,
**characterised in that** in the expansion valve (7) is accommodated in a low-pressure return pipe (6, 26) extending between an outlet (3) of an evaporator (1) and a compressor inlet , and that a connection between an inlet port (8) of the expansion valve (7) and a high-pressure pipe (24), and a connection between an outlet port (9) of the expansion valve (7) and a low-pressure pipe (5) to an inlet of the evaporator (1) are made within the low-pressure return pipe (6, 26).

2. Mounting structure according to claim 1, **characterised in that** the evaporator is formed, by joining, integrally with a casing (6) extending from the outlet (3) of the evaporator (1) and accommodating the expansion valve (7), and an inlet pipe (5) disposed at the inlet (2) of the evaporator (1) and having a portion for connection with the outlet port (9) of the expansion valve (7), the portion being open into the casing (6), and that the low-pressure return pipe (26) is connected to an open end of the casing (6).

3. Mounting structure according to claim 2, **characterised in that** the casing (6) is joined to the evaporator (1) in a manner enclosing the inlet (2, 3) and the outlet of the evaporator (1).

4. Mounting structure according to claim 2, **characterised in that** the casing (6) is joined to the evaporator (1) in a manner enclosing the outlet (3) of the evaporator (1), that one end of the inlet pipe (5) is joined to the inlet (2) of the evaporator (1), that another end of the inlet pipe (5) is positioned within the casing (6) in a manner extending through the casing (6), and that the inlet pipe (5) and the casing (6) are hermetically joined to each other.

5. Mounting structure according to claim 2, **characterised in that** the low-pressure return pipe (26) is connected to the open end of the casing (6) via a joint part joined to a foremost end of the low-pressure return pipe (26), and that the high-pressure pipe (24) extends through the joint part, the high-pressure pipe (24) and the joint part being hermetically joined to each other.

6. Mounting structure according to claim 2, **characterised in that** the low-pressure return pipe (26) and the high-pressure pipe (24) are formed as a double pipe in which the high-pressure pipe 824) is concentrically disposed within the low-pressure return pipe (26).

7. Mounting structure according to claim 1, **characterised in that** a connecting part (6a) is connected to the evaporator (1) in a manner enclosing the inlet (2) and the outlet (3) of the evaporator (1), that an inlet pipe (5) is connected to the inlet (2) of the evaporator (1), that a casing (6) to which a joint part (27) is joined in a manner extending in a direction orthogonal to the inlet pipe (5) is connected to the connecting part (6a), that the low-pressure return pipe (26) is connected to the joint part (27), and tat the expansion valve (7) within the casing (6) has the inlet port (8) and the outlet port (9) in respective directions orthogonal to each other.

8. Mounting structure according to claim 1, **characterised in that** a casing (6) accommodating the expansion valve (7) is disposed in an intermediate portion of the low-pressure return pipe (26), and that the high-pressure pipe (24) which is concentrically disposed in the low-pressure return pipe (26) at a location closer to the compressor than to the casing (6) is connected to the inlet port (8) of the expansion valve (7).

9. Mounting structure according to claim 1, **characterised in that** a casing (6) accommodating the expansion valve (79 is disposed in an intermediate portion of the low-pressure return pipe (26), and that an evaporator inlet pipe (5) concentrically disposed within the low-pressure return pipe (26) at a location closer to the evaporator (1) than to the casing (6) is connected to the outlet port (9) of the expansion valve (7).

10. Mounting structure according to claim 9, **characterised in that** the portion of the low-pressure return pipe (26) closer to the evaporator (1) and the casing (6) are joined to each other.

11. Mounting structure according to claim 1, **characterised in that** a casing (6) accommodating the expansion valve (7) is disposed in an intermediate portion of the low-pressure return pipe (26), and that the high-pressure pipe (24) is connected to the inlet port (8) of the expansion valve (7) in a manner extending through the casing (6).

12. Mounting structure according to claim 1, **characterised in that** a casing (6) accommodating the expansion valve (7) is disposed in an intermediate portion of the low-pressure return pipe (26), and that an evaporator inlet pipe (5) is connected to the outlet port (9) of the expansion valve (7) in a manner extending through the casing (6).

13. Mounting structure according to claim 2, **characterised in that** the casing (6) is formed for positioning the expansion valve (7) such that a shape of the casing at a location where the expansion valve (7) is mounted is adapted to an outer shape of the expansion valve (7).

14. Mounting structure according to claim 1, **characterised in that** the evaporator (1) is formed, by joining, integrally with a hollow cylindrical connecting part (6a) extending from the evaporator in a manner enclosing the inlet (2) and the outlet (3) of the evaporator (1) and an evaporator inlet pipe (5), that a hollow cylindrical casing (6) accommodating the expansion valve (7) is connected at a peripheral surface with the low-pressure return pipe (26), and that one end of the casing (6) is closed and connected to the connecting part (6a).

15. Mounting structure according to claim 14, **characterised in that** the casing (6) and the low-pressure return pipe (26, 26a) are connected to each other by welding.

16. Mounting structure according to claim 14, **characterised in that** the connection between the casing (6) and the low-pressure return pipe (26, 26a) is a connection effected by sealing using an O-ring and swaging.

17. Mounting structure according to claim 14, **characterised in that** the high-pressure pipe (24) is concentrically disposed within the low-pressure return pipe (26), or is connected to the casing (6) in a direction orthogonal to the low-pressure return pipe (26).

18. Mounting structure according to claim 17, **characterised in that** a portion of the casing (6) on a side opposite from a side where the high-pressure pipe (24) is disposed is deformed inward to thereby press the expansion valve (7) connected to the high-pressure pipe (24) via a sealing portion, toward the high-pressure pipe (24).

19. Mounting structure according to claim 17, **characterised in that** the connection between the high-pressure pipe (24, 24a) and the casing (6) in the direction orthogonal to the low-pressure return pipe (26, 26a) is a connection effected by welding.

20. Mounting structure according to claim 17, **characterised in that** the connection between the high-pressure pipe (24, 24a) and the casing (6) in the direction orthogonal to the low-pressure return pipe (26, 26a) is a connection effected by sealing using an O-ring and swaging.

21. Mounting structure according to claim 18, **characterised in that** a portion of the casing (69 where the high-pressure pipe (24, 24a) is welded and its vicinity are formed to have a flat surface so as to define a flat sealing portion of an inner surface of the casing (6) and the expansion valve (7).

22. Mounting structure according to claim 14, **characterised in that** the evaporator (1) has the inlet (2) and the outlet (3) arranged in parallel, and that the outlet port (9) of the expansion valve (7) is formed in a manner eccentric toward the inlet (2) of the evaporator (1) with respect to a centre of the expansion valve (7).

23. Mounting structure according to claim 14, **characterised in that** the evaporator (1) has the inlet (2) and the outlet (3) concentrically disposed, and that the expansion valve (7) is disposed in the casing (6) such that the outlet port (9) of the expansion valve (7) and the inlet (2) of the evaporator (1) are on an identical axis.

24. Mounting structure according to claim 14, **characterised in that** a soundproofing member (48) is disposed on at least one of an inner inside and an outer outside of the casing (6), for insulating noise generated by the expansion valve (7).

25. Mounting structure according to claim 24, **characterised in that** the soundproofing member (48) is disposed on the inner side of the casing (6) in a manner covering the expansion valve (7).

26. Mounting structure according to claim 1, **characterised in that** the expansion valve (7) is a thermostatic expansion valve.
